# EUROPEAN PATENT SPECIFICATION

(11) **EP 1 295 449 B1**
(45) Date of publication and mention of the grant of the patent: **30.11.2005**
(21) Application number: 00945104.8
(22) Date of filing: 30.06.2000
(51) Int. Cl.: H04L 27/00, H04L 25/03

(54) **CONFIGURABLE EXCITER FOR INFORMATION TRANSMISSION SYSTEMS**
KONFIGURIERBARER ERREGER FÜR NACHRICHTENÜBERTRAGUNGSSYSTEME
DISPOSITIF D'EXCITATION CONFIGURABLE POUR SYSTEMES DE TRANSMISSION D'INFORMATIONS

(43) Date of publication of application: 26.03.2003
(73) Proprietor: HARRIS CORPORATION, Melbourne Florida 32912 (US)
(72) Inventor: TWITCHELL, Edwin, San Jose, CA 95124 (US); HAUSER, James, Liberty Township, OH 45044 (US)
(74) Representative: Meddle, Alan L.
(86) International application number: PCT/US2000/018247
(87) International publication number: WO 2002/003639

(56) References cited:
- EP-A- 0 806 852
- WO-A-97/16046
- WO-A-99/09721
- US-A- 4 425 664
- US-A- 5 892 879

## Description

The present invention relates to communication systems, and is particularly directed to an exciter useable for a plurality of communication formats.

With the advent of digital television ("DTV") broadcasting, it is apparent that there will be at least two format standards utilized. Within the United States, the Federal Communication Commission ("FCC") has adopted an eight vestigial sideband ("8VSB") format Elsewhere within the world, a coded orthogonal frequency division and multiplexing ("COFDM") format has been adopted.

Also, current analog television systems exist under either the National Television System Committee ("NTSC", U.S. and Japan) format or the Phase Alternation by Line ("PAL", elsewhere) format. Further, various other transmission formats exist. Examples of such transmission formats include Frequency Modulation ("FM"), Amplitude Modulation ("AM"), Digital Audio Broadcast ("DAB"), Quadrature Amplitude Modulation ("QAM"), Code Division Multiple Access ("CDMA"), and Time Division Multiple Access ("TDMA").

Each of these different types of transmission use various types of modulation, occupy different bandwidths, and/or operate on different frequencies (channels). Digital systems that would be used within each of these types of transmission systems differ in their implementation details. For example, a comparison of the 8VSB and COFDM digital television formats indicate that there are differences relating to data rates, parity bits, block size and other parameters.

However, despite the differences, transmission systems of the various formats have certain characteristics that are common. From the standpoint of a manufacturer of broadcast transmission equipment, it would be beneficial to capitalize on the common aspects of the various types of transmission formats. This would allow a manufacturer to capitalize on economies of scale regarding manufacture of various transmission format systems.

US 4,425,664 describes a programmable universal data set capable of simultaneously servicing a plurality of data terminals desiring diverse types of data sets. The universal data set comprises analogue and digital buffer processors for interfacing respectively with a transmission medium and a plurality of data terminals, a high speed digital processor for modulating and demodulating the data sets, and a cyclic processor for controlling the operational sequence of the high speed processor. In addition to modulating and demodulating the data sets, the high speed processor performs all other data set signal manipulations such as equalisation, filtering and digital data formatting.

EP 0806852 describes a modem having a digital signal processor that executes one of a number line code programs stored in memory. Consequently, the modem is able to selectively operate in the voice-band frequency or at higher frequency bands by switching programs. Additionally, different ADSL line codes, such as discrete multitone and carrierless AM/PM, can be implemented on the same hardware platform.

WO 99/09721 describes a communications terminal that adapts to different operating standards by using software algorithms and digital processing. The communications terminal includes a digital signal processor, micro processor circuits, volatile and non-volatile memory, signal characteristics stored in memory, and receiver circuitry to receive and digitise a radio signal. The communications terminal receives the radio signal, converts the radio signal into a digital signal and compares the signal characteristics of the digital signal to signal characteristics of stored signals. The comparison of the signals identifies the standard of the radio signal and determines the format and protocol of the signal. The hardware is then reconfigured to operate according to the identified standard, format and protocol.

WO 97/16046 describes an apparatus for communicating variable or fixed length data packets in variable length bursts over a physical layer in the multi layer communication scheme. The apparatus includes a programmable block processor which groups information data into blocks according to a selected grouping mode. A programmable encoder encodes the blocks with error control data according to a selected coding level. The apparatus further includes an interface for selecting a burst mode that uses a particular grouping mode and a particular coding level. The apparatus may further comprise a programmable modulator for modulating the encoded blocks for transmission.

In accordance with one aspect, the present invention provides an exciter for location along an information stream path of a transmission system, for supplying an information signal as a drive to an amplifying arrangement, said exciter comprising coder means for outputting the information signal that conveys data in a predetermined code arrangement, filter means for restricting the information signal energy to a predetermined channel bandwidth, modulator means for modulating the information signal, and corrector/equalizer means for pre-correcting the modulated signal for errors induced in the transmission system,
characterized in that filter means is located downstream of said coder means on the information stream path; said modulator means is located downstream of said filter means on the information stream path; said correcting/equalizer means is located downstream of said modulator means on the information stream path; each of said coder means said filter means, said modulator means, and said corrector/equalizer means is programmable to be operative in any of several I/O formats; and said exciter comprises controller means for providing program control of said coder means, said filter means, said modulator means, and said corrector/equalizer means.

Advantageously, the present invention includes an exciter, located along an information stream path of a transmission system, for supplying an information signal as a drive to an amplifying arrangement, said exciter comprising coder means for outputting the information signal that conveys data in a predetermined code arrangement, filter means for restricting the information signal energy to a predetermined channel bandwidth, modulator means for modulating the information signal, corrector/equalizer means for pre-correcting the modulated signal for errors induced in the transmission system, characterized in that at least two of said coder means, said filter means, said modulator means, and said corrector/equalizer means being programmable to be operative in any of several I/O formats, and controller means for providing program control of said at least two of said coder means, said filter means, said modulator means, and said corrector/equalizer means, in which said at least two of said coder means, said filter means, said modulator means, and said corrector/equalizer means are said coder means and said filter means the present invention provides an exciter, located along an information stream path of a transmission system, for supplying an information signal as a drive to an amplifying arrangement. Filter means, programmable to be operative in any of several I/O formats, confines the signal energy to a predetermined channel bandwidth. Modulator means, programmable to be operative in any of several I/O formats, modulates the baseband signal. Corrector/equalizer means, programmable to be operative in any of several I/O formats, pre-corrects the modulated signal for errors induced in the transmission system. Controller means provides program control of the filter means, the modulator means, and the corrector/equalizer means. The present invention includes an exciter, located along an information stream path of a transmission system, for supplying an information signal as a drive to an amplifying arrangement, said exciter comprising filter means, programmable to be operative in any of several I/O formats, for restricting the information signal energy to a predetermined channel bandwidth, modulator means, programmable to be operative in any of several I/O formats, for modulating the information signal, characterized in that corrector/equalizer means, programmable to be operative in any of several I/O formats, for pre-correcting the modulated signal for errors induced in the transmission system, controller means for providing program control of said filter means, said modulator means, and said corrector/equalizer means.

Conveniently, the present invention provides an exciter, located along an information stream path of a transmission system, for supplying an information signal as a drive to an amplifying arrangement. Coder means, programmable to be operative in any of several I/O formats, outputs the information signal that conveys data and a .desired code arrangement. Modulator means, programmable to be operative in any of several I/O formats, modulates the baseband signal. Corrector/equalizer means, programmable to be operative in any of several I/O formats, pre-corrects the modulated signal for errors induced in the transmission system Controller means provides program control of the coder means, the modulator means, and the corrector/equalizer means.

Suitably, the present invention provides an exciter, located along an information stream path of a transmission system, for supplying an information signal as a drive to an amplifying arrangement. Coder means, programmable to be operative in any of several I/O formats, outputs the information signal that conveys data and a desired code arrangement Filter means, programmable to be operative in any of several I/O formats, confines the signal energy to a predetermined channel bandwidth. Corrector/equalizer means, programmable to be operative in any of several I/O formats, pre-corrects the modulated signal for errors induced in the transmission system. Controller means provides program control of the coder means, the filter means, and the corrector/equalizer means.

Moreover, the present invention provides an exciter, located along an information stream path of a transmission system, for supplying an information signal as a drive to an amplifying arrangement. Coder means, programmable to be operative in any of several I/O formats, outputs the information signal that conveys data and a desired code arrangement. Filter means, programmable to be operative in any of several I/O formats, confines the signal energy to a predetermined channel bandwidth. Modulator means, programmable to be operative in any of several I/O formats, modulates the baseband signal. Controller means provides program control of the coder means, the filter means, and the modulator means.

Moreover the present invention provides an exciter, located along an information stream path of a transmission system, for supplying an information signal as a drive to an amplifying arrangement Coder means, programmable to be operative in any of several I/O formats, outputs the information signal that conveys data and a desired code arrangement. Filter means, programmable to be operative in any of several I/O formats, confines the signal energy to a predetermined channel bandwidth. Modulator means, programmable to be operative in any of several I/O formats, modulates the baseband signal. Corrector/equalizer means, programmable to be operative in any of several I/O formats, pre-corrects the modulated signal for errors induced in the transmission system. Controller means provides program control of the coder means, the filter means, the modulator means, and the corrector/equalizer means.

The present invention will now be described, by way of example, with reference to the accompanying drawings, in which:
Fig. 1 is a schematic illustration of a first embodiment of a system having an exciter in accordance with the present invention;
Fig. 2 is a chart illustrating several example types of transmission format with associated programming specifics; and
Fig. 3 is a schematic illustration of a second embodiment in accordance with the present invention.

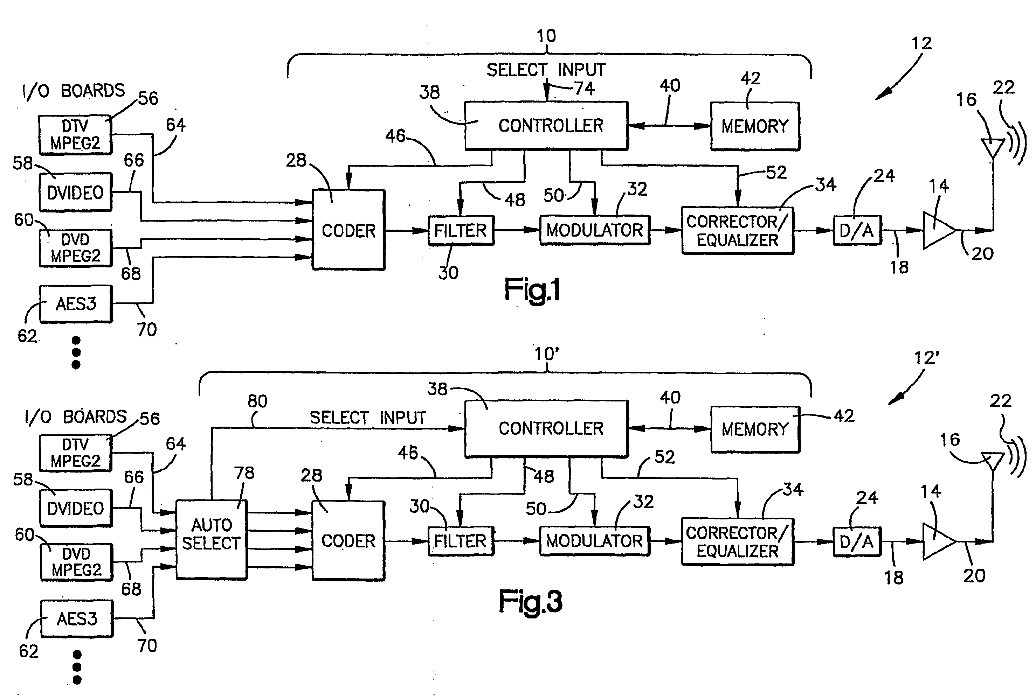

One representation of an exciter 10 is schematically shown in Fig. 1 within a broadcast transmission system 12. The system 12 includes a power amplifier arrangement 14 and a broadcast transmission antenna 16. The power amplifier 14 amplifies an analog input 18 and outputs a stimulus signal 20 to the antenna 16, such that the antenna broadcasts a signal 22 having the desired strength characteristics. Located upstream of the power amplifier 14 is a digital-to-analog ("D/A") converter 24. The exciter 10 is located upstream of the D/A converter 24 and operates in the digital domain.

The exciter 10 includes a coder component 28 for processing data. The processing may include randomizing, interleaving, block coding (e.g., Reed Solomon encoding), and convolutional coding (e.g., Trellis encoding). Also, the processing may include symbol formatting, or other types of data encoding.

Located downstream of the coder 28 is a filter component 30 that confines the signal energy to a predetermined channel bandwidth. The filtering may include low-pass filtering, bandpass filtering, vestigial sideband filtering, and may be performed in the time domain or in the frequency domain. If frequency domain processing is used, a discrete Fourier transform is required.

A modulator component 32, located downstream of the filter 30, modulates the information signal onto a carrier frequency. This may include complex up-conversion or other processing (e.g., Fast Fourier Transform).
A corrector/equalizer component 34 is located downstream of the modulator 32 and upstream of the D/A converter 24. The corrector/equalizer 34 compensates for distortion of the information signal that occurs elsewhere in the system 12. For example the power amplifier 14 can distort the information signal. The compensation that occurs within the corrector/ equalizer 34 may include correction of non-linear distortion, or equalization of linear distortion. Each of the coder 28, the filter 30, the modulator 32, and the corrector/equalizer 34 is comprised of a Digital Signal Processor ("DSP") component or a programmable logic device("PLD", e.g., FPGA or EPLD) that is programmed to accomplish the associated function. Programming for each of the coder 28, the filter 30, the modulator 32, and the corrector/equalizer 34 is provided from a controller 38. Specifically, the controller 38 accesses 40 a memory 42 to receive stored program information. The controller 38 is operatively connected 46-52 to the coder 28, the filter 30, the modulator 32, and the corrector/equalizer 34, respectively, to provide program information to these four components.

The coder 28, the filter 30, the modulator 32, and the corrector/equalizer 34 each have a certain degree of generic attributes. Specifically, the coder 28, the filter 30, the modulator 32, and the corrector/equalizer 34 are not predisposed (e.g., configured) or "ear-marked" for a particular transmission (broadcast) format. The transmission format that is utilized within the four components of the exciter 10 is dependent upon the format for which the system 12 that includes the exciter will be utilized.

A plurality of input/output (I/O) boards 56-62 is connected to provide respective inputs 64-70 into the coder 28. I/O boards within the disclosed embodiment are hardwire boards that are provided for a DTV MPEG2 format, a DVIDEO format, a DVD MPEG2 format, an AES3 format It is to be appreciated that different and/ or additional I/O boards may be provided for different formats. Thus, it is to appreciated that the coder 28, the filter 30, the modulator 32, and the corrector/equalizer 34 are programmable by the controller 38 to process the information signal coming from any of the several different format inputs. The programming is initiated via a select input 74 provided by an operator (not shown) of the system 12.

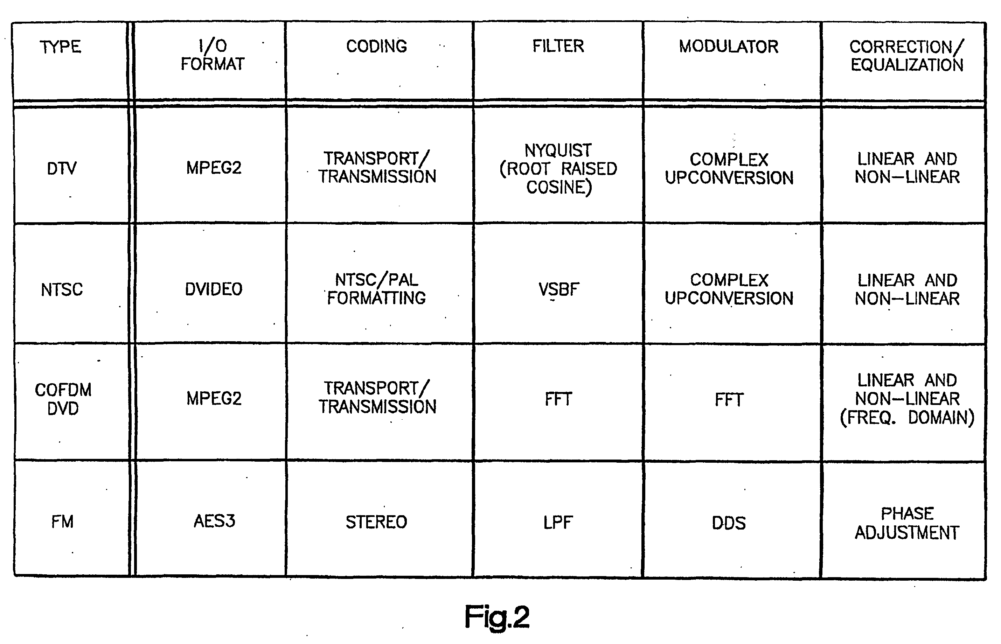

Fig. 2 is a chart illustrating example types of transmission systems and the associated different programming characteristics. For example, within a DTV transmission system, the I/O format is typically MPEG2. Within the configurable exciter 10, the coder 28 is programmed for transport/transmission formatting, the filter 30 is programmed to perform a Nyquist filter function (e.g., a root-raised-cosine function). The modulator 32 is programmed to provide complex up-conversion, and the corrector/equalizer 34 is programmed to provide linear and non-linear correction.

To provide a transmission system for NTSC, the I/O format is DVIDEO. Within the configurable exciter 10, the coder 28 is programmed to provide NTSC/PAL video formatting. The filter 30 is programmed to provide Vestigial Sideband Filtering (VSBF). The modulator 32 is programmed to provide complex up-conversion, and the corrector/equalizer 34 is programmed to provide linear and non-linear correction.

To provide a transmission system for COFDM, the I/O format is MPEG2. The coder 28 is programmed to provide transport/ transmission formatting. The filter 30 is programmed to provide a filtering function based upon the Fast Fourier Transformation that is programmed to occur within the modulator 32. The corrector/ equalizer 34 is programmed to provide linear and non-linear correction, but within the frequency domain.

To provide a transmission system for FM, the I/O format is digital audio in the AES3 standard format. The coder 28 is programmed to perform a stereo generator function with FM stereo output. The filter 30 is programmed to provide a low-pass filtering. The modulator 32 is programmed for direct digital FM conversion using direct digital synthesis ("DDS").

Fig. 3 illustrates an embodiment that has a modification to permit automatic control. In other words, an operator need not select the type of system that the exciter is programmed to handle. In Fig. 3, the system is designated 12' and the exciter is designated 10' to indicate the modification from the embodiment of Fig. 1. Components of the embodiment of Fig. 3 that are identical to the corresponding components of the embodiment of Fig. 1 are identified by identical reference numbers.

In the embodiment of Fig. 3, an auto-select function portion 78 receives the inputs 64-70 from the various I/O boards 56-62. Dependent upon which I/O board (e.g., 56) is actively outputting its signal (e.g., 64), the auto-select function 78 provides a signal 80 to the controller 38. In response to the signal 80, the controller 38 accesses the memory 42 and provides programming to the coder 28, the filter 30, the modulator 32, and the corrector/equalizer 34, similar to the embodiment shown in Fig.1.

The system is to be capable of handling DTV format signals, the digital signal processors must have sufficient capability to handle such high speed, high rate signals. For example, processing within a DTV modulator requires thousands of megaflops of processing power.

In addition, the input rates could be dictated by the types of format that requires the greatest amount DTV and COFDM systems require approximately 20 Mb/s input rate. Thus, if the system is to be able to handle DTV and COFDM systems, the input rates of approximately Mb/s would be an upper range.

From a manufacturing standpoint, a single fixed platform could be manufactured, and then programmed for the desired application. From a customer's standpoint, modifications to the system can be accomplished merely upon a change of the programming that would be provided by the controller. Further, it should be appreciated that even within a single type of format (e.g., DTV), changes to the system can be accomplished merely by reprogramming. Thus, the present invention has several advantages over "hardwired" systems.

An exciter (10) is located along an information stream path of a transmission system (12). The exciter (10) supplies an information signal as a drive to an amplifying arrangement (14). A coder (28), programable tp be operative in any of several I/O formats, outputs the information signal that conveys in a desired code arrangement. A filter (30), programmable to be operative in any of several I/O formats, confines the information signal energy to a predetermined channel bandwidth. A modular (32), programmable to be operative in any of several I/O formats, modulating the information signal. A corrector/ equalizer (34), programmable to be operative in any of several I/O formats, pre-corrects the modular signal for errors induced in the transmission system. A controller (38) provides program control of the coder (28), the filter (30), the modulator (32), and the corrector/equalizer (34). Thus, the exciter (10) is configurable to handle several formats, such as MPEG2, DVIDEO, and AES3.

## Claims

1. An exciter (10) for location along an information stream path of a transmission system, for supplying an information signal as a drive to an amplifying arrangement (14), said exciter comprising coder means (28) for outputting the information signal that conveys data in a predetermined code arrangement, filter means (30) for restricting the information signal energy to a predetermined channel bandwidth, modulator means (32) for modulating the information signal, and corrector/equalizer means (34) for pre-correcting the modulated signal for errors induced in the transmission system, **characterized in that** said filter means (30) is located downstream of said coder means (28) on the information stream path; said modulator means (32) is located downstream of said filter means (30) on the information stream path; said correcting/equalizer means (34) is located downstream of said modulator means (32) on the information stream path; each of said coder means (28), said filter means (30), said modulator means (32), and said corrector/equalizer means (34) is programmable to be operative in any of several I/O formats; and said exciter (10) comprises controller means (38) for providing program control of said coder means (28), said filter means (30), said modulator means (32), and said corrector/equalizer means (34).

2. An exciter (10) as claimed in claim 1, **characterized in that** said coder means (28), said filter means (30), said modulator means (32), and said corrector equalizer means (34) each include a programmable logic device.

3. An exciter (10) as claimed in claim 1, **characterized** is that said coder means (28), said filter means (30), said modulator means (32), and said corrector/equalizer means (34) are programmable to be operative for an MPEG2 format.

4. An exciter (10) as claimed in claim 1, **characterized in that** said coder means (28), said filter means (30), said modulator means (32), and said corrector/equalizer means (34) are programmable to be operative for a DVIDEO format.

5. An exciter (10) as claimed in claim 1, **characterized in that** said coder means (28), said filter means (30), said modulator means (32), and said corrector/equalizer means (34) are programmable to be operative for a AES3 format.

6. An exciter (10) as claimed in claim 1, including memory means (42) storing program information, said controller means (3 8) is configured to access said memory means (42) to retrieve programming information for use in programming said coder means (28), said filter means (30), said modulator means (32), and said corrector/equalizer means (34), said controller means (38) including means for providing programming to each of said coder means (28), said filter means (30), said modulator means (32), and said corrector/equalizer means (34) independently, and each of said coder means (28), said filter means (30), said modulator means (32), and said corrector/equalizer means (34) being capable of having programming changed independently of the programming of the others of said coder means (28), said filter means (30), said modulator means (32), and said corrector/equalizer means (34).

7. An exciter (10) as claimed in claim 1, **characterized in that** said coder means (28) is configured to be connected to a plurality of inputs (64,66,68,70), said controller means (30) including means for providing programming to said coder means (28) to process information from one of the plurality of inputs.

8. An exciter (10) as claimed in claim 7, including means (78) for automatically detecting which of the plurality of inputs (64,66,68,70) is active and for providing a signal indicative of the active input to said controller means (38), said controller means (38) including means for using the signal indicative of the active input to provide said programming control to said coder means (28), said filter means. (30), said modulator means (32), and said corrector/equalizer means (34).

9. An exciter (10) as claimed in claim 7, **characterized in that** said controller means (38) includes means (74) for receiving an input from an operator for selecting an I/O format, said controller means (38) including means for using the selected I/O format to provide said programming control to said coder means (28), said filter means (30), said modulator means (32), and said corrector/equalizer means (34).

## Patentansprüche

1. Exciter (10), der vorgesehen ist, entlang eines Informationsstrom-Wegs eines Übertragungssystems angeordnet zu werden, um eine Verstärkervorrichtung (14) mit einem Informationssignal als Ansteuerung zu versorgen, wobei der Exciter Codiermittel (28) zum Ausgeben des Informationssignals, welches Daten in einer vorbestimmten Codeanordnung trägt, Filtermittel (30) zum Beschränken der Informationssignalenergie auf eine vorbestimmte Kanalbandbreite, Modulationsmittel (32) zum Modulieren des Informationssignals und Korrektur/Equalizer-Mittel (34) umfaßt, um das modulierte Signal vorab bezüglich Fehler zu korrigieren, die durch das Übertragungssystem verursacht wurden, **dadurch gekennzeichnet, daß** die Filtermittel (30) den Codiermitteln (28) auf dem Informationsstrom-Weg nachgeschaltet sind, die Modulatormittel (32) den Filtermitteln (30) auf dem Informationsstrom-Weg nachgeschaltet sind; die Korrektur/Equalizer-Mittel (34) den Modulatormitteln (32) auf dem Informationsstrom-Weg nachgeschaltet sind, wobei jede der Codiermittel (28), Filtermittel (30), Modulatormittel (32) und Korrektur/Equalizermittel (34) programmierbar sind, um in jedem von mehreren Eingabe/Ausgabeformaten betrieben werden zu können; und wobei der Exciter Steuermittel (38) zum Vorsehen einer Programmsteuerung der Codiermittel (28), der Filtermittel (30), der Modulatormittel (32) und der Korrektur/Equalizermittel (34) umfaßt.

2. Exciter (10) nach Anspruch 1, wobei die Codiermittel (28), die Filtermittel (30), die Modulatormittel (32) und die Korrektur/Equalizermittel (34) jeweils eine programmierbare Logikvorrichtung umfassen.

3. Exciter (10) nach Anspruch 1, wobei die Codiermittel (28), die Filtermittel (30), die Modulatormittel (32) und die Korrektur/Equalizermittel (34) zum Betreiben in einem MPEG2-Format programmierbar sind.

4. Exciter (10) nach Anspruch 1, wobei Codiermittel (28), die Filtermittel (30), die Modulatormittel (32) und die Korrektur/Equalizermittel (34) zum Betreiben in einem DVIDEO-Format programmierbar sind.

5. Exciter (10) nach Anspruch 1, wobei die Codiermittel (28), die Filtermittel (30), die Modulatormittel (32) und die Korrektur/Equalizermittel (34) zum Betreiben in einem AES3-Format programmierbar sind.

6. Exciter (10) nach Anspruch 1, umfassend: Speichermittel (42), die Programminformation speichern, wobei die Steuermittel (38) eingerichtet sind, auf die Speichermittel (42) zuzugreifen, um Programminformation zur Verwendung bei der Programmierung der Codiermittel (28), der Filtermittel (30), der Modulatormittel (32) und der Korrektur/Equalizermittel (34) abzurufen, wobei die Steuermittel (38) Mittel zum Vorsehen von Programmierung für die Codiermittel (28), die Filtermittel (30), die Modulatormittel (32) und die Korrektur/Equalizermittel (34) unabhängig voneinander umfassen, wobei die Codiermittel (28), die Filtermittel (30), die Modulatormittel (32) und die Korrektur/Equalizermittel (34) derart eingerichtet sind, daß ihre Programmierung unabhängig von der Programmierung der anderen Codiermittel (28), Filtermittel (30), Modulatormittel (32) und Korrektur/Equalizermittel (34) geändert werden kann.

7. Exciter (10) nach Anspruch 1, wobei die Codiermittel (28) eingerichtet sind, mit mehreren Eingängen (64, 66, 68, 70) verbunden zu werden, wobei die Steuermittel (30) Mittel zum Vorsehen von Programmierung für die Codiermittel (28) umfaßt, um Information zu verarbeiten, die von einem der mehreren Eingänge stammt.

8. Exciter (10) nach Anspruch 7, mit Mitteln (28) zum automatischen Detektieren, welcher der mehreren Eingänge (64, 66, 68, 70) aktiv ist, und zum Vorsehen eines Signals, das den Steuermitteln (38) den aktiven Eingang angibt, wobei die Steuermittel (38) Mittel zum Verwenden des Signals, welches den aktiven Eingang angibt, umfassen, um Programmierungssteuerung den Codiermitteln (28), den Filtermitteln (30), den Modulatormitteln (32) und den Korrektur/Equalizermitteln (34) zur Verfügung zu stellen.

9. Exciter (10) nach Anspruch 7, wobei die Steuermittel (38) Mittel (74) zum Empfangen einer Eingabe von einem Bediener zum Auswählen eines Eingabe/Ausgabeformats umfassen, wobei die Steuermittel (38) Mittel zum Verwenden des gewählten Eingabe/Ausgabeformats umfassen, um den Codiermitteln (28), den Filtermitteln (30), den Modulatormitteln (32) und den Korrektur/Equalizermitteln (34) die Programmierungssteuerung zur Verfügung zu stellen.

## Revendications

1. Excitateur (10)pour un emplacement le long d'un chemin de flux d'informations d'un système de transmission, destiné à alimenter un signal d'informations en tant qu'excitation vers un agencement d'amplification (14), ledit excitateur comprenant des moyens de codage (28) pour fournir en sortie le signal d'informations qui achemine des données dans un agencement de code prédéterminé, des moyens de filtrage (30) pour restreindre l'énergie du signal d'informations pour une largeur de bande de voie prédéterminée, des moyens de modulation (32) pour moduler le signal d'informations, et des moyens de correction/égalisation (34) pour corriger préalablement le signal modulé concernant des erreurs induites dans le système de transmission, **caractérisé en ce que** lesdits moyens de filtrage (30) sont situés entre lesdits moyens de codage (28) sur le chemin de flux d'informations ; lesdits moyens de modulation (32) sont situés à l'aval desdits moyens de filtrage (30) sur le chemin de flux d'informations ; lesdits moyens de correction/égalisation (34) sont situés à l'aval desdits moyens de modulation (32) sur le chemin de flux de transmission ; chacun desdits moyens de codage (28), desdits moyens de filtrage (30), desdits moyens de modulation (32), et desdits moyens de correction/égalisation (34) est programmable pour être opérationnel dans l'un quelconque de plusieurs formats E/S ; et ledit excitateur (10) comprend des moyens contrôleurs (38) pour fournir un contrôle de programme desdits moyens de codage (28), desdits moyens de filtrage (30), desdits moyens de modulation (32) et desdits moyens de correction/égalisation (34).

2. Excitateur (10) selon la revendication 1, **caractérisé en ce que** lesdits moyens de codage (28), lesdits moyens de filtrage (30), lesdits moyens de modulation (32), et lesdits moyens de correction/égalisation (34), chacun comprend un dispositif logique programmable.

3. Excitateur (10) selon la revendication 1, **caractérisé en ce que** lesdits moyens de codage (28), lesdits moyens de filtrage (30), lesdits moyens de modulation (32), et lesdits moyens de correction/égalisation (34) sont programmables pour être opérationnels pour un format MPEG2.

4. Excitateur (10) selon la revendication 1, **caractérisé en ce que** lesdits moyens de codage (28), lesdits moyens de filtrage (30), lesdits moyens de modulation (32), et lesdits moyens de correction/égalisation (34) sont programmables pour être opérationnels pour un format DVIDEO.

5. Excitateur (10) selon la revendication 1, **caractérisé en ce que** lesdits moyens de codage (28), lesdits moyens de filtrage (30), lesdits moyens de modulation (32) et lesdits moyens de correction/égalisation (34) sont programmables pour être opérationnels pour un format AES3.

6. Excitateur (10) selon la revendication 1, comprenant des moyens de mémoire (42) stockant des informations de programme, lesdits moyens contrôleurs (38) sont configurés pour accéder auxdits moyens de mémoire (42) afin de récupérer les informations de programmation pour une utilisation dans la programmation desdits moyens de codage (28), desdits moyens de filtrage (30), desdits moyens de modulation (32) et desdits moyens de correction/égalisation (34), lesdits moyens contrôleurs (38) comprenant des moyens pour fournir la programmation pour chacun desdits moyens de codage (28), desdits moyens de filtrage (30), desdits moyens de modulation (32) et desdits moyens de correction/égalisation (34) indépendamment, et chacun desdits moyens de codage (28), desdits moyens de filtrage (30), desdits moyens de modulation (32) et desdits moyens de correction/égalisation (34) étant capable d'avoir la programmation changée indépendamment de la programmation des autres desdits moyens de codage (28), desdits moyens de filtrage (30), desdits moyens de modulation (32) et desdits moyens de correction/égalisation (34).

7. Excitateur (10) selon la revendication 1, **caractérisé en ce que** lesdits moyens de codage (28) sont configurés pour être connectés à une pluralité d'entrées (64, 66, 68, 70), lesdits moyens contrôleurs (30) comprenant des moyens pour fournir la programmation auxdits moyens de codage (28) afin de traiter les informations provenant de l'une de la pluralité d'entrées.

8. Excitateur (10) selon la revendication 7, comprenant des moyens (78) pour détecter automatiquement chacune de la pluralité d'entrée (64, 66, 68, 70) qui est active et. pour fournir un signal indiquant l'entrée active auxdits moyens contrôleurs (38), lesdits moyens contrôleurs (38) comprenant des moyens pour utiliser le signal indiquant l'entrée active afin de fournir ledit contrôle de programmation auxdits moyens de codage (28), auxdits moyens de filtrage (30), auxdits moyens de modulation (32) et auxdits moyens de correction/égalisation (34).

9. Excitateur (10) selon la revendication 7, **caractérisé en ce que** lesdits moyens contrôleurs (38) comprennent des moyens (74) pour recevoir une entrée d'un opérateur pour sélectionner un format E/S, lesdits moyens contrôleurs (38) comprenant des moyens pour utiliser le format E/S sélectionné afin de fournir ledit contrôle de programmation auxdits moyens de codage (28), auxdits moyens de filtrage (30), auxdites moyens de modulation (32) et auxdits moyens de correction/égalisation (34).
